# EUROPÄISCHE PATENTSCHRIFT

(11) **EP 2 118 016 B1**
(45) Veröffentlichungstag und Bekanntmachung des Hinweises auf die Patenterteilung: **15.06.2011**
(21) Anmeldenummer: 08708309.3
(22) Anmeldetag: 29.01.2008
(51) Int. Cl.: C01G 39/00

(54) **VERFAHREN ZUR HERSTELLUNG VON AMMONIUMHEPTAMOLYBDAT**
METHOD FOR PRODUCING AMMONIUM HEPTAMOLYBDATE
PROCÉDÉ DE FABRICATION D'HEPTAMOLYBDATE D'AMMONIUM

(30) Priorität: 02.02.2007 DE 102007005285
(43) Veröffentlichungstag der Anmeldung: 18.11.2009
(73) Patentinhaber: H.C. Starck GmbH, 38642 Goslar (DE)
(72) Erfinder: STOLLER, Viktor, 38667 Bad Harzburg (DE); ERB, Michael, 38259 Salzgitter (DE); MEESE-MARKTSCHEFFEL, Juliane, 38642 Goslar (DE); DECKER, Benno, 38667 Bad Harzburg (DE)
(86) Internationale Anmeldenummer: PCT/EP2008/050991
(87) Internationale Veröffentlichungsnummer: WO 2008/092835

(56) Entgegenhaltungen:
- DE-A1- 2 801 067
- GB-A- 1 453 225
- US-A- 3 357 821
- US-A- 3 458 277
- US-A- 3 576 595

## Beschreibung

Die vorliegende Erfindung betrifft ein neues Verfahren zur Herstellung von Ammoniumheptamolybdat.

Ammoniumheptamolybdat (nachstehend AHM genannt) ist ein bekanntes Zwischenprodukt für die Herstellung von Molydänmetallpulver sowie von Molybdän enthaltenden Katalysatoren.

Die Herstellung von Ammoniumheptamolybdat (nachstehend AHM genannt) erfolgt grundsätzlich über das Lösen von technischen Molybdänoxiden, welche durch Röstung von Molybdänsulfidkonzentraten erhalten werden, in Wasser bzw. alkalischer Lösung. Die entstehende Lösung wird z. B. über Flüssig-Flüssig-Extraktion oder unter Verwendung eines festen Ionenaustauscherharzes gereinigt. Die gereinigte Lösung wird in der Regel durch Eindampfen aufkonzentriert und nach der Einstellung des erforderlichen pH-Wertes, z. B. durch Zugabe von Mineralsäuren, wird AHM mittels Kühlkristallisation auskristallisiert.

Nach einem weiteren Weg wird die vorgereinigte Ammoniummolybdatlösung durch Ansäuerung zu einem Zwischenprodukt, z. B. Ammoniumpolymolybdat, umgearbeitet. Das Zwischenprodukt wird in ammoniakalischer Lösung in der Wärme gelöst und AHM anschließend durch Abkühlen kristallisiert.

Ein Verfahren zur Herstellung von AHM wird in der SU-A-1,723,042 beschrieben. Das Verfahren besteht darin, dass technisches Molybdänoxid mit Wasser und Ammoniaklösung bei pH 6,0-6,8 aufgeschlossen wird und eine Lösung mit einem Gehalt von etwa 20-24% MoO₃ erzeugt wird. Diese Lösung wird anschließend bei etwa 20-30°C über kombinierte Gewebe- und Membranfilter filtriert und durch Verdampfung bei etwa 50-70°C bis zur MoO₃-Konzentration von etwa 36-40% aufkonzentriert. Danach wird das AHM-Produkt durch Abkühlung auskristallisiert. Nachteile dieses Verfahrens sind der hohe Energieverbrauch bei der Aufkonzentration der Molybdänlösung, der hohe Gehalt an Verunreinigungen im AHM aufgrund eines fehlenden Reinigungsschrittes für die Abtrennung von gelösten Verunreinigungen und die niedrige Produktausbeute durch die Molybdänverluste mit der Mutterlauge.

In der US-A-4,079,116 wird ein weiteres Verfahren zur Herstellung von AHM beschrieben. Dieses umfasst das Laugen und Filtrieren von technischem Molybdänoxid mit Wasser und die Reinigung dieser Lösung mittels Ionenaustauschprozess von kationischen Verunreinigungen. Anschließend wird der Rückstand der Wasserlaugung mit der gereinigten Lösung vereinigt und mit Ammoniaklösung aufgeschlossen. Aus der entstehenden Lösung wird über eine Verdampfungskristallisation ADM auskristallisiert. Die ADM-Mutterlauge wird nach pH-Wert-Einstellung, z. B. mit Kohlendioxid, schließlich zur AHM-Kühlkristallisation geführt. In einer zweiten Ausführungsvariante dieser Patentschrift wird die Lösung des ammoniakalischen Aufschlusses zur Aufkonzentration und Einstellung des pH-Wertes bei etwa 55°C im Vakuum eingedampft und anschließend zur AHM-Kühlkristallisation geführt. Nachteilig bei diesen Verfahren ist, dass wiederum eine energieintensive Aufkonzentration der Molybdänlösung durch Verdampfung durchgeführt wird und dass das AHM-Produkt hohe Verunreinigungsgehalte aufweist, da hier die Reinigungsstufe nicht die Abtrennung von anionischen Verunreinigungen und Alkalimetallen ermöglicht. Ein weiterer Nachteil des Verfahrens besteht darin, dass ein hoher Ammoniaküberschuß bezogen auf das AHM-Produkt eingesetzt wird, welcher durch ein aufwendiges Verfahren zurückgewonnen werden muss.

In der Veröffentlichung "The use of solvent extraction for the production and recovery of high-purity ammonium paramolybdate from normal alkali moldybdate solution (Journal of the Less-Common Metals (1974, 36(112), 111-116) wird die Herstellung von AHM beschrieben. Nach diesem Verfahren wird technisches Molybdänoxid mit Natronlauge aufgeschlossen und die entstehende Natriummolybdatlösung über eine Flüssig-Flüssig-Extraktion gereinigt. Bei der Extraktion wird das Molybdän von einer Amin enthaltenden organischen Phase selektiv aufgenommen und nach einer Wasserwaschung mit 15,7 molarer Ammoniaklösung im Überschuss bei einem Ammoniak: Molybdän-Stoffmengenverhältnis (nachstehend NH₃:Mo-Stofimengenverhältnis genannt) von etwa 9,0 gestrippt. Die entstehende reine Ammoniummolybdatlösung mit 250g/l MoO₃ wird eingedampft und einer AHM-Kühlkristallisation zugeführt. Nachteil dieses Verfahrens ist wiederum der hohe Energieverbrauch der hier erforderlichen Aufkonzentration des Molybdängehaltes und der Einstellung des für die AHM-Kristallisation notwendigen NH₃:Mo-Stoffmengenverhältnisses von 0,9 bis 1,4. Außerdem muß der hohe Ammoniaküberschuß bezogen auf das AHM-Produkt durch ein aufwendiges Verfahren zurückgewonnen werden.

Im Artikel "Production of ammonium paramolybdate from nonstandard molybdenite concentrate by extraction (Nauch. Tr., Irkutsk. Nauch.-Issled. Inst. Redk. Tsvet. Metal (1972), No. 27, 138-145) wird ein Verfahren zur Herstellung von AHM beschrieben. Dabei wird technisches Molybdänoxid mit Soda aufgeschlossen. Die entstehende Natriummolybdatlösung wird bis pH 1-2 angesäuert und das Molybdän mit Trioctylamin extrahiert. Die Molybdänbeladung der organischen Phase beträgt etwa 140g/l. Die Reextraktion erfolgt unter Einsatz von 15-20%iger Ammoniaklösung, so dass die Stripplösung 180-200g/l Mo und ein NH₃: Mo-Stoffmengenverhältnis von 4,3 bis 5,8 enthält. Durch eine anschließende Ansäuerung mit einer Mineralsäure wird Ammoniumpolymolybdat auskristallisiert und abgetrennt. Danach wird das Kristallisat mit Ammoniaklösung aufgelöst und zu AHM umkristallisiert. Nachteil dieses Verfahrens ist, dass wiederum keine direkte AHM-Kühlkristallisation aus der Stripplösung durchgeführt werden kann, da das NH₃:Mo-Stoffmengenverhältnis der Lösung einen deutlich zu hohen Wert dafür aufweist. Um das erforderliche Verhältnis von 0,9 bis 1,4 zu erreichen, wird über zusätzliche Prozeßschritte ein Ammoniumpolymolybdat-Zwischenprodukt hergestellt und wieder aufgelöst. Auch hier muß der hohe Ammoniaküberschuss bezogen auf das AHM-Produkt durch ein aufwendiges Verfahren zurückgewonnen werden.

Aufgabe der vorliegenden Erfindung ist es, ein Verfahren zur Verfügung zu stellen, das die Nachteile der bekannten Verfahren vermeidet. Insbesondere ist es Aufgabe der Erfindung ein hoch reines AHM ohne energieintensive Aufkonzentration und ohne hohen Ammonaküberschuss, bezogen auf das AHM-Produkt, mit weniger Prozeßschritten herzustellen.

Im Stand der Technik ist bislang kein Verfahren zur Herstellung von hoch reinem AHM beschrieben worden, bei dem AHM ohne Aufkonzentration durch Eindampfen und/oder Ansäuerung bzw. Entfernung des Ammoniaküberschusses direkt aus der Sfripplösung kristallisiert werden kann.

Überraschenderweise wurde jetzt ein Verfahren gefunden, das es erlaubt, eine saubere Ammoniummolybdatlösung herzustellen, aus welcher AHM direkt über eine Kühlkristallisation hergestellt werden kann.

Die Erfindung beruht auf der überraschenden Erkenntnis, dass bei der Reextraktion oder Desorption einer Molybdän enthaltenden organischen Phase, flüssiger bzw. fester Ionenaustauscher, mit einer ammoniakhaltigen Lösung eine Reextraktions- oder Desorptionslösung mit einem NH₃: Mo-Stoffmengenverhältnis von 0,9 bis 1,4 und einer Molybdänkonzentration zwischen 18-24 Gew.% gewonnen werden kann, aus welcher AHM über eine Kühlkristallisation direkt ohne zusätzliche und energieaufwendige Zwischenschritte kristallisiert werden kann.

Bei Durchführung von zwei oder mehreren hintereinandergeschalteten Reextraktionsschritten beträgt bei deutlich geringerem Ammoniakverbrauch im Vergleich zu den bekannten Verfahren die Reextraktionsausbeute nahezu 100%.

Durch Rückführung der Mutterlauge aus der AHM-Kühlkristallisation und Verwendung von 25 Gew.%-iger Ammoniaklösung zur Reextraktion der mit Molybdän beladenen organischen Phase wird eine sehr hohe AHM-Ausbeute, bezogen auf den Molybdängehalt der beladenen organischen Phase, von 96,5 % erreicht. Bei Erhöhung der Ammoniakkonzentration der ammoniakhaltigen Lösungen kann die Ausbeute noch weiter gesteigert werden.

Die vorliegende Erfindung betrifft ein Verfahren zur Herstellung Ammoniumheptamolybdat mit den Schritten:
i) Zugabe von einer Molybdän enthaltenden organischen Phase in eine Flüssig-Flüssig-Reextraktionsvorrichtung oder in eine Fest-Flüssig-Reextraktionsvorrichtung (Desorptionsvorrichtung) und Zugabe einer Ammoniak enthaltenden wässerigen Lösung in diese Reextraktions- oder Desorptionsvorrichtung, und
ii) direkte Kühlkristallisation von Ammoniumheptamolybdat durch Abkühlung der entstehenden Reextraktions- oder Desorptionslösung.

Die Idee des erfindungsgemäßen Verfahrens besteht darin, die Reextraktion oder Desorption von Molybdän aus einer organischen Phase, z. B. aus flüssigen organischen Phasen oder aus festen Ionenaustauscherharzen, so durchzuführen, dass bei erreichbarer vollständiger Reextraktion oder Desorption die resultierende Reextrations- oder Desorptionslösung ein Stoffmengenverhältnis von Ammoniak zu Molybdän von 0,9 bis 1,4, bevorzugt 1,0 bis 1,2, und eine Molybdänkonzentration von 18 bis 24 Gew.% Mo, bevorzugt 18,5 bis 20,5 Gew.% Mo, aufweist und aus dieser Lösung hoch reines AHM direkt über eine Kühlkristallisation auskristallisiert wird.

Bei einem NH₃: Mo-Stoffmengenverhältnis außerhalb des angegebenen Bereiches kristallisiert kein reinphasiges AHM. Molybdänkonzentrationen über 24 Gew.% Mo in der wässerigen Phase verursachen bei Verwendung von flüssigen organischen Phasen Probleme bei der Phasentrennung bzw. führen bei der Verwendung von festen Ionenaustauschern zur Zukristallisation des Ionenaustauschers. Molybdänkonzentrationen unterhalb von 18,0 Gew.% Mo in der wässerigen Phase führen zur Verringerung der Kristallisationsausbeute.

In einer bevorzugten Ausführungsform des erfindungsgemäßen Verfahrens besteht die Idee darin, dass zur Reextraktion oder Desorption Mutterlauge der Kühlkristallisation eingesetzt wird.

Das erfindungsgemäße Verfahren kann diskontinuierlich oder bevorzugt kontinuierlich betrieben werden.

Als Molybdän enthaltende organische Phase in Schritt i) können an sich bekannte Produkte eingesetzt werden.

Bei den festen organischen Phasen kann es sich um handelsübliche Anionenaustauscherharze handeln, wie z. B. auf einer vernetzten PolystyrolMatrix gebundene tertiäre oder quartäre Amine wie Lewatit MP 62 oder Lewatit MP 500, welche auf für den Fachmann bekannte Weise mit Molybdän beladen werden.

Bevorzugt werden in Schritt i) als Ausgangslösungen flüssige organische Phasen, bestehend z. B. aus 15% Diisotridecylamin, 10 bis 15% Isodecanol und 70-75% eines aliphatischen Kohlenwasserstoffgemisches (z. B. ESCAID 120) eingesetzt, welche auf für den Fachmann bekannte Weise mit 40 bis 70g/l Molybdän, bevorzugt 50 bis 60g/l Molybdän beladen werden. Anstelle von sekundären Aminen können auch andere Basen, wie tertiäre Amine, oder auch quatäre Ammoniumsalze und andere Modifier verwendet werden; anstelle von Isodecanol können auch andere Alkohole verwendet werden; es können auch andere Kohlenwasserstoffgemische mit anderen Zusammensetzungsverhältnissen eingesetzt werden.

Als wässerige ammoniakhaltige Lösung in Schritt i) kann eine wässerige Ammoniaklösung eingesetzt werden. Bevorzugt wird eine wässerige Ammoniaklösung in Kombination mit der Molybdän und Ammoniak enthaltenden Mutterlauge der AHM-Kühlkristallisation verwendet.

Die Reextraktion oder Desorption des Molybdäns kann in einem oder in mehreren Schritten in für den Fachmann bekannten Reextraktionsapparaturen aus Misch- und Trennstufe, z. B. Mixer-Settler-Apparaturen, durchgeführt werden. Vorzugsweise erfolgt die Reextraktion oder die Desorption in zwei Schritten, wobei die entstehenden Reextrations- oder Desorptionslösungen vereinigt werden.

Die Reextraktionslösung oder Desorptionslösung weist typischerweise Temperaturen von 40 bis 90°C, bevorzugt von 55 bis 65°C, auf.

Die reextrahierte organische Phase wird mit Wasser gewaschen und zur Molybdänbeladung zurückgeführt.

In Schritt ii) des erfindungsgemäßen Verfahrens wird die im Schritt i) erhaltene Reextrations- oder Desorptionslösung gekühlt, so dass AHM kristallisiert. Dabei wird die Kühlkristallisation so durchgeführt, dass die resultierende Mutterlauge eine Molybdänkonzentration von 9,0 bis 13 Gew.%, bevorzugt 10,5 bis 12,0 Gew.%, aufweist. Die Durchführung der Kühlkristallisation ist dem Fachmann bekannt.

Anschließend wird das AHM durch z. B. Filtrieren oder Zentrifugieren abgetrennt und auf bekannte Weise getrocknet.

Die bei der Kristallisation anfallende Mutterlauge wird vor Einsatz im Schritt i) des Verfahrens vorzugsweise auf 55-65°C erwärmt.

In den Figuren und den nachstehenden Ausführungsbeispielen wird die Erfindung beschrieben. Eine Begrenzung auf diese Beispiele und Figuren ist dadurch nicht beabsichtigt.

Es zeigen:
Figur 1: Eine Ausführungsform des erfindungsgemäßen Verfahrens zur Herstellung von AHM (Einstromverfahren, eine Flüssig-Flüssig-Reextraktionsstufe)
Figur 2: Eine weitere Ausführungsform des erfindungsgemäßen Verfahrens zur Herstellung von AHM (Einstromverfahren, zwei Flüssig-Flüssig-Reextraktionsstufen)
Figur 3: Eine weitere Ausführungsform des erfindungsgemäßen Verfahrens zur wahlweisen Herstellung von AHM und ADM (Teilstromverfahren)
Beispiel 1: Einstromverfahren (2 Reextraktionsstufen)

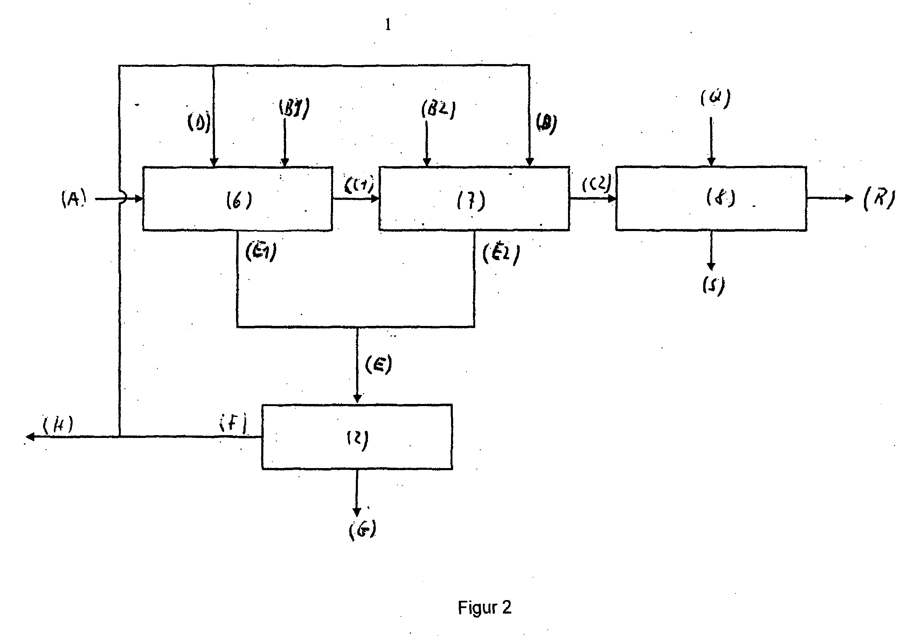

Das in diesem Beispiel beschriebene Verfahren ist in Figur 2 skizziert. In dieser Figur sind zwei Reextraktionsstufen (6, 7) dargestellt, in welchen eine Flüssig-Flüssig-Extraktion durchgeführt wird. Die Reextraktionsstufen (6, 7) bestehen jeweils aus einem nicht dargestellten Rührgefäß, in dem eine organische Phase enthaltend gelöstes Molybdat mit wässeriger Ammoniaklösung und mit Mutterlauge aus der AHM-Kristallisation unter Rühren miteinander vermischt werden, und aus einem nachgeschalteten und nicht dargestellten Klärgefäß ("Settler"), in dem die wässrige Phase und die organische Phase unter Schwerkrafteinwirkung sich trennen und durch unterschiedliche Leitungen abgeführt werden.

Zur Herstellung von AHM wurde technisches Molybdänoxid auf konventionelle Weise mit Natronlauge aufgeschlossen. Die entstehende Natriummolybdatlösung wurde bei etwa pH 2,5 mit einer Ditridecylaminhaltigen organischen Phase (nachstehend "OP" genannt) extrahiert. Aufschluss und Extraktion sind in Figur 2 nicht dargestellt. Das Produkt dieser Operationen wurde durch Leitung (A) in das Rührgefäß der ersten Reextraktionsstufe (6) eingeleitet. Dort wurde die mit Molybdän beladene OP mit Mutterlauge aus der AHM-Kristallisation über Leitung (D) und mit 25 %-iger wässeriger Ammoniaklösung über Leitung (B1) kombiniert und in der ersten Reextraktionsstufe (6) reextrahiert. Die Dosierraten wurden dabei so gewählt, dass in der Reextraktionslösung ein Verhältnis von NH₃: Mo (molar) von 1,15 : 1 und eine Molybdänkonzentration von 19,55 Gew.% eingestellt wurde. Der Inhalt des ersten Rührgefässes wurde kontinuierlich in einen ersten Settler übergeführt und die Reextraktionsiösung wurde über Leitung (E1) der Kühlkristallisation (2) zugeleitet.

Die organische Phase aus dem ersten Settler wurde über Leitung (C1) in ein nicht dargestelltes zweites Rührgefäß übergeführt, das zusammen mit einem nicht dargestellten zweiten Settler die zweite Reextraktionsstufe (7) bildete. Im zweiten Rührgefäß wurden über Leitung (B2) 25 %ige wässerige Ammoniaklösung sowie über Leitung (D) Mutterlauge aus der AHM-Kristallisation (2) zugeführt. Die Dosierraten wurden dabei so gewählt, dass in der Reextraktionslösung ein Verhältnis von NH₃: Mo (molar) von 2,13: 1 und eine Molybdänkonzentration von 18,5 Gew.% eingestellt wurde. Der Inhalt des zweiten Rührgefässes wurde kontinuierlich in einen zweiten Settler übergeführt und die Reextraktionslösung wurde über Leitung (E2) ebenfalls der Kühlkristallisation (2) zugeleitet.

Die organische Phase aus dem zweiten Settler wurde über Leitung (C2) einem Wäscher (8) zugeführt und dort im Gegenstrom mit über Leitung (Q) zugeführtes Wasser gewaschen, um verbliebenes Ammoniak daraus vollständig zu entfernen. Das Molybdän-freie organische Lösungsmittelgemisch wurde über Leitung (R) abgeführt und in den Prozess der Molybdän-Extraktion zurückgeführt. Aus dem durch Leitung (S) abgeführten Waschwasser wurde das Ammoniak entfernt und das Waschwasser wurde in den Prozess des Molybdän-Aufschlusses zurückgeführt.

Vor der Kühlkristallisation wurden die wässerigen Phasen aus Leitung (E1) und aus Leitung (E2) vereinigt und über Leitung (E) der Kühlkristallisation (2) zugeführt. Die Kühlkristallisation (2) bestand aus einem nicht näher dargestellten temperierbaren Rührgefäß und einer nicht dargestellten Nutsche zum Auftrennen von auskristallisiertem AHM-Produkt von der Mutterlauge. Das AHM-Produkt (G) wurde aus dem Prozess ausgeschleust. Die Mutterlauge der Kühlkristallisation wurde über Leitung (F) abgeführt. Ein Teil der AHM-Mutterlauge wurde über Leitung (H) aus dem Prozess ausgeschleust und ein weiterer Teil der AHM-Mutterlauge wurde über Leitung (D) in die Reextraktionsstufen (6, 7) zurückgeführt. Die AHM-Produktausbeute betrug, bezogen auf den Mo-Gehalt der OP, 96,5 %. In Stufe 1 betrug die Reextraktionsausbeute 94,5%, bei einer Gesamtreextraktionsausbeute von 100%.

### Beispiel 2: Einstromverfahren (1 Extraktionsstufe)

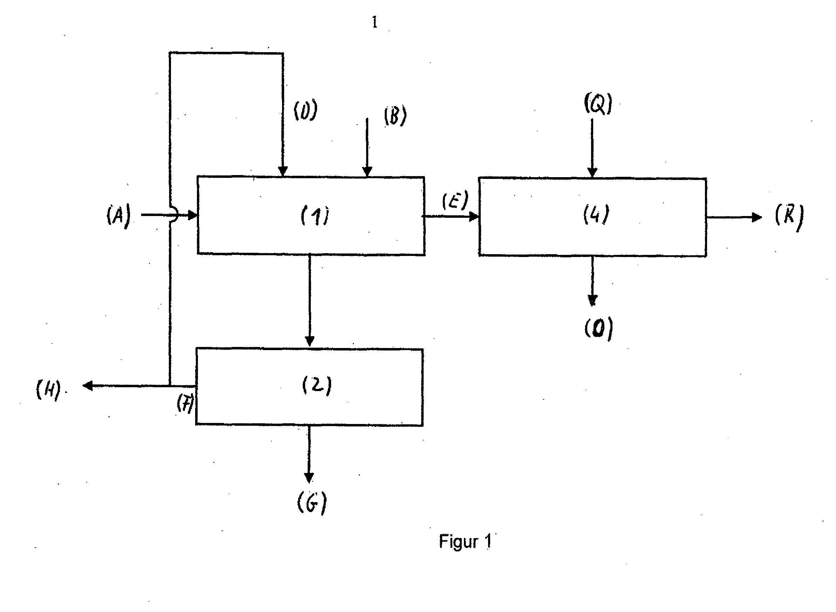

Das in diesem Beispiel beschriebene Verfahren ist in Figur 1 skizziert. In dieser Figur kam nur eine Reextraktionsstufe (1) zum Einsatz, in welcher eine Flüssig-Flüssig-Extraktion durchgeführt wurde. Die Reextraktionsstufe (1) bestand wie in Beispiel 1 aus einer Kombination Rührgefäß / Settler.

Technisches Molybdänoxid wurde, wie in Beispiel 1 beschrieben, auf konventionelle Weise mit Natronlauge aufgeschlossen. Die entstehende Natriummolybdatlösung wurde bei ca. pH 2,5 mit einer Ditridecylamin-haltigen organischen Phase extrahiert. Die mit Molybdän beladene OP wurde über Leitung (A) in die Reextraktionsstufe (1) eingeleitet und im nicht dargestellten Rührgefäß dieser Reextraktionsstufe (1) mit über Leitung (D) zugeführter Mutterlauge aus der AHM-Kristallisation (2) und über Leitung (B) zugeführter wässeriger Ammoniaklösung reextrahiert, so dass in der Reextraktionslösung eine Molybdänkonzentration von 19,0% und ein NH₃:Mo-Stoffmengenverhältnis von 1,20 eingestellt wurde. Die Reextraktionslösung wurde anschließend der AHM-Kühlkristallisation (2) zugeführt und die mit ca. 3,0 g/l Mo restbeladene OP aus der Reextraktionsstufe (1) wurde über Leitung (E) einem Wäscher (4) zugeführt und mit über Leitung (Q) zugeführtes Wasser im Gegenstrom gereinigt. Nach der Waschung wurde die OP über Leitung (R) zur Extraktion zurückgeführt und das Wasser über Leitung (O) aus dem Wäscher abgeführt.

Die Kühlkristallisation (2) entsprach in ihrem Aufbau der Kühlkristallisation des Beispiels 1. Das AHM-Produkt (G) wurde aus dem Prozess ausgeschleust. Die Mutterlauge der Kühlkristallisation wurde über Leitung (F) abgeführt, ein Teil der AHM-Mutterlauge wurde über Leitung (H) aus dem Prozess ausgeschleust und ein weiterer Teil der AHM-Mutterlauge wurde über Leitung (D) in die Reextraktionsstufe (1) zurückgeführt. Die AHM-Produktausbeute betrug, bezogen auf den Mo-Gehalt der OP, 96,5 %.

### Beispiel 3: Teilstromverfahren

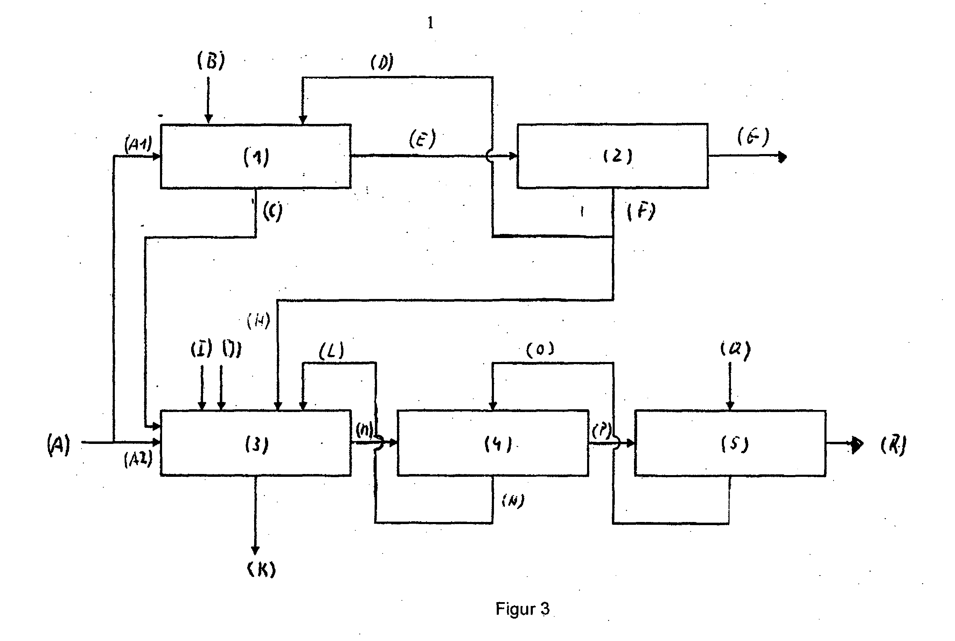

Das in diesem Beispiel beschriebene Verfahren ist in Figur 3 skizziert. In dieser Figur kam nur eine Reextraktionsstufe (1) zum Einsatz, in welcher eine Flüssig-Flüssig-Extraktion durchgeführt wurde. Neben einer im oberen Teil der Figur dargestellten Vorrichtung zur Herstellung von AHM ist im unteren Teil ein Rührgefäß (3) dargestellt, das den Teil einer Vorrichtung zur Herstellung von ADM bildet. Die Reextraktionsstufe (1) für den AHM-Prozess bestand wie in Beispiel 1 aus einer nicht dargestellten Kombination Rührgefäß / Settler.

Technisches Molybdänoxid wurde, wie in Beispiel 1 beschrieben, auf konventionelle Weise mit Natronlauge aufgeschlossen. Die entstehende Natriummolybdatlösung wurde bei ca. pH 2,5 mit einer Ditridecylamin-haltigen organischen Phase (OP) extrahiert. Ein Teilstrom der beladenen OP wurde über Leitung (A1) in das Rührgefäß der Reextraktionsstufe (1) eingeleitet und dort mit über Leitung (D) zugeführter Mutterlauge aus der AHM-Kühlkristallisation (2) mit 11,66% Mo und einem NH₃:Mo-Stoffmengenverhältnis von 1,55, und über Leitung (B) zugeführter wässeriger Ammoniaklösung reextrahiert, so dass in der über Leitung (E) abgeführten Reextraktionslösung eine Molybdänkonzentration von 19,24% und ein NH₃:Mo-Stoffmengenverhältnis von 1,20 eingestellt wurde. Die Reextraktionsausbeute betrug hierbei ca. 94,5%.

Die Reextraktionslösung wurde anschließend über Leitung (E) der AHM-Kühlkristallisation (2) zugeführt und bei 15-20°C auskristallisiert. Das AHM Produkt (G) wurde aus dem Prozess ausgeschleust. Die AHM Mutterlauge wurde über Leitung (F) abgeführt und ein Teil der AHM Mutterlauge wurde über Leitung (D) in den Reextraktionsprozess der AHM-Herstellung zurückgeführt. Ein weiterer Teil der AHM Mutterlauge wurde über Leitung (H) einem Rührgefäß (3) zugeführt, welches Teil einer Anlage zur konventionellen Reextraktion zur Herstellung von ADM bildete.

In diesem Rührgefäß (3) wurde die restbeladene OP aus dem Reextraktionsprozess der AHM-Herstellung mit dem zweiten durch Leitung (A2) zugeführten OP-Teilstrom vereinigt. In diesem Teil der Anlage wurde das Molybdän auf konventionelle Weise zur Herstellung von ADM reextrahiert. Dazu wurden ein Teil der AHM-Mutterlauge (3,3% der Gesamtmutterlaugenmenge) zusammen mit über Leitungen (I, J, L) zugeführten wässerigen Ammoniaklösungen zur konventionellen Reextraktion gegeben. Die entstehende Reextraktionslösung wurde über Leitung (K) abgeführt und über eine nicht dargestellte Verdampfungskristallisation zu Ammoniumdimolybdat (ADM) umgearbeitet. Die OP aus dem Rührgefäß (3) wurde über Wäscher (4, 5) geführt und dort im Gegenstrom mit über Leitungen (Q, O) geführtes Wasser von Ammoniak befreit. Die Wäscher (4,5) waren durch Leitung (P) miteinander verbunden. Die gereinigte OP wurde über Leitung (R) aus Wäscher (5) abgeführt und in den Prozess zurückgeführt.

Die AHM-Produktausbeute betrug, bezogen auf den Mo-Gehalt des OP-Teilstromes, 91,5%.

Mit der dargestellten Arbeitsweise ließen sich ausgehend von einer OP-Ausgangslösung sowohl AHM als auch ADM in unterschiedlichen Mengenverhältnissen herstellen. Dieses konnte durch die Dimensionierung der OP-Teilströme in den Leitungen (A1, A2) eingestellt werden.

## Patentansprüche

1. Verfahren zur Herstellung-von Ammoniumheptamolybdat mit den Schritten:
i) Zugabe von einer Molybdän enthaltenden organischen Phase in eine Flüssig-Flüssig-Reextraktionsvorrichtung oder in eine Desorptionsvorrichtung und Zugabe einer Ammoniak enthaltenden wässerigen Lösung in diese Reextraktions- oder Desorptionsvorrichtung, wobei die Menge an Ammoniak derart ausgewählt wird, dass sich nach der Reextraktion oder der Desorption in der resultierenden Reextraktions- oder Desorptionslösung ein Stoffmenaenverhältnis von Ammoniak zu Molybdän von 0,9 bis 1,4 einstellt, und
ii) direkte Kühlkristallisation von Ammoniumheptamolybdat durch Abkühlung der entstehenden Reextraktions- oder Desorptionslösung.

2. Verfahren nach Anspruch 1, **dadurch gekennzeichnet, dass** sich ein Stoffmengenverhältnis von Ammoniak zu Molybdän von 1,0 bis 1,2, einstellt.

3. Verfahren nach einem der Ansprüche 1 bis 2, **dadurch gekennzeichnet, dass** zur Reextraktion oder Desorption in Schritt i) Mutterlauge aus der Kühlkristallisation zugeführt wird.

4. Verfahren nach Anspruch 3, **dadurch gekennzeichnet, dass** die Mutterlauge aus der Kühlkristallisation vor Einsatz in Schritt i) auf 55-65°C erwärmt wird.

5. Verfahren nach einem der Ansprüche 1 bis 4, **dadurch gekennzeichnet, dass** die zur Reextraktion oder Desorption zugeführte Menge an Mutterlauge und/oder an Ammoniaklösung derart ausgewählt wird, so dass sich in der resultierenden Reextraktions- oder Desörptionslösung eine Molybdänkonzentration von 18,0 bis 24,0 Gew.%, bevorzugt 18,5 bis 20,5 Gew.%, einstellt.

6. Verfahren nach einem der Ansprüche 1 bis 5, **dadurch gekennzeichnet, dass** die Zugabe der Ammoniak enthaltenden wässerigen Lösung in mindestens zwei Schritten erfolgt.

7. Verfahren nach einem der Ansprüche 1 bis 6, **dadurch gekennzeichnet, dass** die Reextraktion oder Desorption des Molybdäns in zwei Schritten erfolgt, wobei die entstehenden Reextrations- oder Desorptionslösungen vor der Kühlkristallisation vereinigt werden.

8. Verfahren nach einem der Ansprüche 1 bis 7, **dadurch gekennzeichnet, dass** als Molybdän enthaltende organische Phase eine Molybdän enthaltende flüssige organische Phase eingesetzt wird.

9. Verfahren nach einem der Ansprüche 1 bis 8, **dadurch gekennzeichnet, dass** die Kühlkristallisation so durchgeführt wird, so dass die Molybdänkonzentration der Mutterlauge zwischen 9,0 bis 13 Gew.%, bevorzugt 10,5 bis 12,0 Gew.% beträgt.

10. Verfahren nach einem der Ansprüche 1 bis 9, **dadurch gekennzeichnet, dass** die Herstellung von Ammoniumheptamolybdat mit den Schritten i) bis ii) mit einer Herstellung von Ammoniumdimolybdat gekoppelt wird, indem ein vorbestimmter Anteil der Molybdän enthaltenden organischen Phase Schritt i) zugeführt wird und der restliche Anteil der Molybdän enthaltenden organischen Phase einer Reextraktionsstufe zur Herstellung von Ammoniumdimolybdat zugeführt wird.

## Claims

1. Process for preparing ammonium heptamolybdate, comprising the steps of:
i) adding a molybdenum-containing organic phase to a liquid-liquid reextraction apparatus or to a desorption apparatus and adding an ammonia-containing aqueous solution to this reextraction or desorption apparatus, the amount of ammonia being selected such that, after the reextraction or the desorption, a quantitative ratio of ammonia to molybdenum of 0.9 to 1.4 is established in the resulting reextraction or desorption solution, and
ii) directly cold-crystallizing ammonium heptamolybdate by cooling the resulting reextraction or desorption solution.

2. Process according to Claim 1, **characterized in that** a quantitative ratio of ammonia to molybdenum of 1.0 to 1.2 is established.

3. Process according to one of Claims 1 and 2, **characterized in that** mother liquor from the cold crystallization is used for the reextraction or desorption in step i).

4. Process according to Claim 3, **characterized in that** the mother liquor from the cold crystallization is heated to 55-65°C before use in step i).

5. Process according to one of Claims 1 to 4, **characterized in that** the amount of mother liquor and/or of ammonia solution supplied to the reextraction or desorption is selected such that a molybdenum concentration of 18.0 to 24.0% by weight, preferably 18.5 to 20.5% by weight, is established in the resulting reextraction or desorption solution.

6. Process according to one of Claims 1 to 5, **characterized in that** the ammonia-containing aqueous solution is added in at least two steps.

7. Process according to one of Claims 1 to 6, **characterized in that** the molybdenum is reextracted or desorbed in two steps, the resulting reextraction or desorption solutions being combined before the cold crystallization.

8. Process according to one of Claims 1 to /, **characterized in that** the molybdenum-containing organic phase used is a molybdenum-containing liquid organic phase.

9. Process according to one of Claims 1 to 8, **characterized in that** the cold crystallization is performed in such a way that the molybdenum concentration of the mother liquor is between 9.0 and 13% by weight, preferably 10.5 and 12.0% by weight.

10. Process according to one of Claims 1 to 9, **characterized in that** the preparation of ammonium heptamolybdate in steps i) to ii) is coupled to a preparation of ammonium dimolybdate by supplying a predetermined proportion of the molybdenum-containing organic phase to step i) and feeding the remaining proportion of the molybdenum-containing organic phase to a reextraction stage for preparing ammonium dimolybdate.

## Revendications

1. Procédé de fabrication d'heptamolybdate d'ammonium comprenant les étapes :
i) l'ajout d'une phase organique contenant du molybdène dans un dispositif de réextraction liquide-liquide ou dans un dispositif de désorption et l'ajout d'une solution aqueuse contenant de l'ammoniac dans ce dispositif de réextraction ou de désorption, la quantité d'ammoniac étant choisie de manière à ajuster un rapport entre les quantités de matière d'ammoniac et de molybdène dans la solution de réextraction ou de désorption résultante après la réextraction ou la désorption de 0,9 à 1,4, et
ii) la cristallisation par refroidissement directe d'heptamolybdate d'ammonium par refroidissement de la solution de réextraction ou de désorption formée.

2. Procédé selon la revendication 1, **caractérisé en ce qu'**un rapport entre les quantités de matière d'ammoniac et de molybdène de 1,0 à 1,2 est ajusté.

3. Procédé selon l'une quelconque des revendications 1 à 2, **caractérisé en ce qu'**une liqueur mère de la cristallisation par refroidissement est introduite pour la réextraction ou la désorption à l'étape i).

4. Procédé selon la revendication 3, **caractérisé en ce que** la liqueur mère de la cristallisation par refroidissement est portée à une température de 55 à 65 °C avant l'utilisation dans l'étape i).

5. Procédé selon l'une quelconque des revendications 1 à 4, **caractérisé en ce que** la quantité de liqueur mère et/ou de solution d'ammoniac introduite pour la réextraction ou la désorption est choisie de manière à ajuster une concentration de molybdène de 10,0 à 24,0 % en poids, de préférence de 10,5 à 20,5 % en poids dans la solution de réextraction ou de désorption résultante.

6. Procédé selon l'une quelconque des revendications 1 à 5, **caractérisé en ce que** l'ajout de la solution aqueuse contenant de l'ammoniac a lieu en au moins deux étapes.

7. Procédé selon l'une quelconque des revendications 1 à 6, **caractérisé en ce que** la réextraction ou la désorption du molybdène a lieu en deux étapes, les solutions de réextraction ou de désorption formées étant réunies avant la cristallisation par refroidissement.

8. Procédé selon l'une quelconque des revendications 1 à 7, **caractérisé en ce qu'**une phase organique liquide contenant du molybdène est utilisée en tant que phase organique contenant du molybdène.

9. Procédé selon l'une quelconque des revendications 1 à 8, **caractérisé en ce que** la cristallisation par refroidissement est réalisée de manière à ce que la concentration de molybdène de la liqueur mère soit comprise entre 9,0 et 13 % en poids, de préférence 10,5 et 12,0 % en poids.

10. Procédé selon l'une quelconque des revendications 1 à 9, **caractérisé en ce que** la fabrication d'heptamolybdate d'ammonium comprenant les étapes i) à ii) est couplée avec une fabrication de dimolybdate d'ammonium en introduisant une fraction prédéterminée de la phase organique contenant du molybdène dans l'étape i) et en introduisant la fraction restante de la phase organique contenant du molybdène dans une étape de réextraction pour la fabrication de dimolybdate d'ammonium.
